# EUROPÄISCHE PATENTANMELDUNG

(11) **EP 3 851 168 A1**
(43) Veröffentlichungstag der Anmeldung: **21.07.2021**
(21) Anmeldenummer: 21152495.4
(22) Anmeldetag: 20.01.2021
(51) Int. Cl.: A62C 2/06, B60P 3/12

(54) **FAHRZEUGANHÄNGER FÜR VERUNFALLTE KRAFTFAHRZEUGE**

(30) Priorität: 20.01.2020 DE 102020101233
(71) Anmelder: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(57) **Zusammenfassung**

Die vorliegende Erfindung betrifft einen Fahrzeuganhänger (1), der zum Aufnehmen und insbesondere Löschen eines verunfallten Kraftfahrzeuges (100) wie insbesondere ein brennendes Elektrofahrzeug ausgebildet ist. Der Fahrzeuganhänger (1) umfasst einen Anhängeraufbau (2), der einen durch Aufbauwände (3, 4) begrenzten Laderaum zum Aufnehmen des verunfallten Kraftfahrzeugs (100) begrenzt, wovon eine Aufbauwand (4) beweglich gelagert ist, so dass diese eine geschlossenen Stellung und eine geöffnete Aufnahmestellung, in der das verunfallte Kraftfahrzeug (100) in den Laderaum überführbar ist, einnehmen kann. Am Fahrzeuganhänger (1) ist eine Greifvorrichtung (6) angebracht, die derart aus- und ein fahrbar ist, dass bei geöffneter Aufbauwand (4) das Kraftfahrzeug (100) mittels der Greifvorrichtung (6) ergreifbar und über die geöffnete Aufbauwand (4) in den Laderaum überführbar ist.

## Beschreibung

### Technisches Gebiet

Die vorliegende Erfindung betrifft einen Fahrzeuganhänger, der zum Aufnehmen und insbesondere Löschen eines verunfallten Kraftfahrzeugs, wie insbesondere eines brennenden Elektrofahrzeugs, ausgebildet ist. Des Weiteren betrifft die vorliegende Erfindung ein Verfahren zum Aufnehmen eines verunfallten Kraftfahrzeugs, wie z.B. ein brennendes Elektrofahrzeug

### Hintergrund

Seit geraumer Zeit nimmt die Anzahl an Kraftfahrzeugen mit Elektroantrieb, auch einfach Elektrofahrzeuge genannt, im Straßenverkehr stetig zu. Die neuere Art von Elektrofahrzeugen weist große Akkumulatoren auf, die bei einem Unfall in Brand geraten können. Es besteht dann die Besonderheit, dass der Akkumulator innerhalb von kurzer Zeit bei einer Zündtemperatur von ungefähr 800°C beginnt, eigenständig abzubrennen.

Wie bereits in der EP 3 263 402 A1 beschrieben ist, nährt der abbrennende Akkumulator selbstständig diesen Brand. Aufgrund der hohen Wärmeentwicklung während eines solchen Brandes gestaltet sich die Bergung und Löschung von Elektrofahrzeugen mit solchen Akkumulatoren als äußerst schwierig. Zwar ist das Löschen unter Verwendung von Löschwasser grundsätzlich möglich, jedoch wird eine große Menge Löschwasser benötigt, da nicht nur der Brand selbst zu löschen ist, sondern darüber hinaus der Akkumulator so weit herunter zu kühlen ist, dass dieser eine Temperatur unterhalb der kritischen Zündtemperatur hat.

In der bereits erwähnten EP 3 263 402 A1 wird darüber hinaus hervorgehoben, dass jenseits von verunfallten Elektrofahrzeugen auch bei konventionellen Fahrzeugen mit Verbrennungsmotor und zudem auch bei Hybridkraftfahrzeugen das Problem besteht, dass infolge eines Unfalls Gefahrstoffe austreten können oder bei Brandgefahr hohe Risiken für Umwelt und umstehende Personen bestehen. Auch bei konventionellen Fahrzeugen besteht daher die Vermeidung von Gesundheits- und Sicherheitsrisiken bei der Bergung und Löschung.

In der EP 3 263 402 A1 wird als Lösung vorgeschlagen, einen nicht fahrbaren Behälter zum Bergen verunfallter Elektrofahrzeuge bereitzustellen. Der Behälter ist zum Transport auf einem speziellen Transportlastkraftwagen ausgebildet. Am Einsatzort wird der Behälter abgeladen. Ein solcher, vorzugsweise als Wechselbehälter, Abrollbehälter oder ISO-Container ausgebildeter Behälter soll einen Behälterboden und mehrere Seitenwände, die einen Aufnahmebereich für das Fahrzeug definieren, umfassen. Eine verschließbare Öffnung zum Überführen des Fahrzeugs in den oder aus dem Aufnahmeraum ist vorhanden. Am Behälter ist eine Winde angeordnet, insbesondere eine Seilwinde, zum Verbringen des Fahrzeugs in den Behälter. Ferner sind eine Anzahl von an dem Behälter angeordneten Anschlüssen zum Einleiten und/oder Überführen von Kühl- bzw. Löschmittel in den Aufnahmebereich vorhanden.

Das Problem eines solchen Behälters besteht zum einen darin, dass dieser nur mittels Spezialfahrzeugen an die Unfallstelle zu verbringen ist. Darüber hinaus ist bei vom Transportfahrzeug abgesetzten Behälter dieser nicht mehr manövrierbar. Darüber hinaus ist die Lösung des Verbringens des verunfallten Kraftfahrzeugs mittels Seilwinde in der Praxis offensichtlich problematisch. Bei den eingangs genannten hohen Temperaturen muss der Haken der Seilwinde an das Fahrzeug oder ein um das Fahrzeug herum manuell gelegtes Netz oder dergleichen eingehakt werden. Beide Maßnahmen sind von einem Feuerwehrmann manuell vorzunehmen. Zum einen ist das Anbringen der Seilwinde an ein solches Netz möglicherweise aufgrund der Temperaturen, wenn überhaupt, für einen Feuerehrmann nur mit Spezialkleidung möglich. Zum anderen sind die verwendeten Haken, Netze etc. unmittelbar den hohen Temperaturen ausgesetzt.

Das der Erfindung zugrunde liegende technische Problem besteht darin, den eingangs genannten bekannten Behälter zu verbessern.

### Zusammenfassung der Offenbarung

Dieses technische Problem wird erfindungsgemäß durch einen Fahrzeuganhänger gelöst, der zum Aufnehmen und insbesondere Löschen eines verunfallten Kraftfahrzeugs, wie insbesondere ein brennendes Elektrofahrzeug, ausgebildet ist. Der Fahrzeuganhänger gemäß der vorliegenden Erfindung weist einen Anhängeraufbau auf, der einen durch Aufbauwände begrenzten Laderaum zum Aufnehmen des verunfallten Kraftfahrzeugs begrenzt. Mindestens eine der Aufbauwände ist beweglich gelagert, so dass diese eine geschlossene Stellung und eine geöffnete Aufnahmestellung einnehmen kann. In der Aufnahmestellung ist das verunfallte Kraftfahrzeug in den Laderaum überführbar. Eine am Fahrzeuganhänger angebrachte Greifvorrichtung ist derart aus- und einfahrbar, dass bei geöffneter Aufbauwand das Kraftfahrzeug mittels der Greifvorrichtung ergreifbar und über die geöffnete Aufbauwand in den Laderaum überführbar ist.

Erstmals wird erfindungsgemäß ein Fahrzeuganhänger bereitgestellt, der in an sich hinlänglich bekannter Weise, beispielsweise über ein Maulkupplungssystem, an ein Zugfahrzeug ankuppelbar und zur Unfallstelle überführbar ist, also insbesondere auf Rädern fahrbar ist. Falls notwendig, ist der erfindungsgemäße Fahrzeuganhänger auch noch an der Unfallstelle gut manövrierbar.

Darüber hinaus erlaubt die am Fahrzeuganhänger angebrachte Greifvorrichtung erstmals, dass eine Bedienperson in sachgemäßem Abstand von der Unfallstelle in der Lage ist, das verunfallte Kraftfahrzeug - auch ein brennendes Elektrofahrzeug - mittels der Greifvorrichtung zu ergreifen und in das Laderauminnere zu ziehen, ohne dass Feuerwehrleute unmittelbar am Unfallfahrzeug Tätigkeiten vornehmen müssen, so wie es früher notwendig war. Bei brennenden und sich wieder entzündbaren Elektrofahrzeugen ist das Hantieren direkt am Elektrofahrzeug in Abhängigkeit vom tatsächlichen Brandumfangs nahezu unmöglich und mit einer erheblichen Gesundheitsgefährdung verbunden.

Bei einer beispielhaften weiteren Ausführungsform der vorliegenden Erfindung ist die Greifvorrichtung als Ladekran mit Greifelement ausgebildet. Das Greifelement umfasst insbesondere ein oder mehrere Greifbacken oder Greifzangen. Alternativ sind auch ein oder mehrere Greifhaken oder Greifrechen vorgesehen. All diese Greifelemente ermöglichen es, entweder das verunfallte Kraftfahrzeug auf der rechten und linken Seite oder an anderen Fahrzeugteilen wie insbesondere im Farhrzeugvorderbereich - oder heckbereich zu packen und dann zu ziehen. Bei einem oder mehreren Greifhaken oder Greifrechen ist es auch möglich, diese in das verunfallte Kraftfahrzeug einzuschlagen und dann durch Einziehen des Ladekrans das verunfallte Kraftfahrzeug in den Aufnahmeraum zu überführen. In allen Fällen ist gewährleistet, dass keine Bedienperson unmittelbar in den gefährlichen Bereich um das verunfallte Kraftfahrzeug eintreten muss. Weiterhin kann durch das schnelle Verbringen des verunfallten Kraftfahrzeugs eine ansonsten auftretende erhebliche Beschädigung der Fahrbahn vermieden werden.

Eine beispielhafte Ausführungsform einer vorliegenden Erfindung sieht vor, dass der Ladekran einen ein- oder mehrgelenkigen Greiferarm umfasst, der insbesondere teleskopierbar ist und an dessen Endbereich das Greifelement angeordnet ist. Durch die ein- oder mehrgelenkige Greiferarmausbildung und insbesondere die teleskopierbare Ausgestaltung des Ladekrans und dessen Greiferarm ist auch bei größerem Abstand des Fahrzeuganhängers vom verunfallten Kraftfahrzeug möglich, das Kraftfahrzeug in irgendeiner Form mittels dem Greifelement zu ergreifen und in den Laderaum oder Aufnahmeraum zu ziehen. Weiterhin ist auf die bereits hinlänglich bekannte Technik von Ladekränen zu verweisen.

Bei einer alternativen Ausführungsform eines erfindungsgemäßen Fahrzeuganhängers ist die Greifvorrichtung mit einem auf der Oberseite des Fahrzeugaufbaus hin- und her bewegbaren Greifarm ausgebildet, der derart bewegbar ist, dass dieser aus dem Laderaum herauskragen kann. Vorzugsweise ist dann an dem herauskragenden Greiferarmbereich ein Greifelement wie ein Haken oder dergleichen oder Rechen, Zange usw. vorhanden. Damit ist auch bei großen Lasten ein Ein- und Ausfahren des Greiferarmbereichs in den Bereich des verunfallten Kraftfahrzeugs möglich und ein stabiles Hereinziehen des verunfallten Kraftfahrzeugs in den Laderaum durchführbar, auch bei den eventuell auftretenden hohen Temperaturen.

Indem bei einer weiteren beispielhaften Ausführungsform der erfindungsgemäßen Vorrichtung die Greifvorrichtung einen auf der Oberseite des Fahrzeugaufbaus hin- und her bewegbaren Schlitten umfasst, der derart bewegbar ist, dass dieser aus dem Laderaum herauskragt, ist es möglich, eine stabile und mechanisch sehr hoch belastbare Ausgestaltung für den Greiferarm und den Schlitten vorzusehen. Darüber hinaus ist auch das Verbringen in den Bereich des verunfallten Kraftfahrzeugs in äußerst stabiler und zuverlässiger Weise möglich. Wiederum ist hier auch insbesondere an dem herauskragenden Schlittenbereich ein sich nach unten erstreckendes bewegbares Greifzangenelement oder Backenelement bzw. Backenpaar zum Ergreifen des verunfallten Kraftfahrzeugs vorhanden.

Eine weitere alternative Ausführungsform eines erfindungsgemäßen Fahrzeuganhängers sieht vor, dass zudem ein an sich bekannter Schubboden (auch Schiebeboden genannt) vorhanden ist, der sich in dem Laderaum befindet und bei geöffneter Aufbauwand über diesen vorstehend ausfahrbar ist. So ist bei diesen bekannten Schub- bzw. Schiebeböden, wie sie im Nutzlastfahrzeugbereich hinlänglich bekannt sind, es möglich, den Fahrzeuganhänger im Bereich des verunfallten Kraftfahrzeugs zu platzieren und dann den Schubboden in bekannter Art und Weise auszufahren und zwar unterhalb des verunfallten Kraftfahrzeugs. Sodann wird allein durch Reibung das verunfallte Kraftfahrzeug durch Einziehen des Schubbodens in bekannter Weise in den Laderaum ermöglicht.

Das Hereinziehen mittels Schubboden wird dadurch vorteilhaft verbessert, dass an der Oberseite des Schubbodens ein oder mehrere Greifelemente wie insbesondere Haken, bewegliche Zinken oder dergleichen vorhanden sind. So sind dann bei Herausfahren des Schubbodens diese derart beweglich, dass sie einem Unterfahren des verunfallten Kraftfahrzeugs nicht entgegenstehen, jedoch bei Hereinziehen des Schubbodens in den Laderaum das verunfallte Kraftfahrzeug nicht mehr auslassen.

Bei einer weiteren beispielhaften Ausführungsform eines erfindungsgemäßen Anhängers kann als Greifelement zudem ein im Laderaum befindliches drehbares Schneckenelement vorhanden sein, das derart in Längserstreckungsrichtung teleskopierbar ist, dass es bei geöffneter Aufbauwand über den Laderaum vorsteht und mit dem verunfallten Kraftfahrzeug in Eingriff gelangt. Es ist so ausgebildet, dass durch Drehen des Schneckenelements des Kraftfahrzeugs das Kraftfahrzeug über die geöffnete Aufbauwand in den Laderaum überführbar ist. Somit wird durch das Schneckenelement und Drehen desselben das verunfallte Kraftfahrzeug mechanisch ergriffen und Stück für Stück in den Laderaum überführt.

Eine alternative Ausführungsform gemäß einem weiteren Aspekt der vorliegenden Erfindung betrifft einen Fahrzeuganhänger, der zum Aufnehmen und insbesondere Löschen eines verunfallten Kraftfahrzeugs, wie insbesondere ein brennendes Elektrofahrzeug, ausgebildet ist. Wie bereits bei dem zuvor erläuterten erfindungsgemäßen Fahrzeuganhänger weist dieser alternative Fahrzeuganhänger einen Anhängeraufbau auf, der einen durch Aufbauwände begrenzten Laderaum zum Aufnehmen des verunfallten Kraftfahrzeugs begrenzt, wovon eine der Aufbauwände beweglich gelagert ist, so dass diese eine geschlossene Stellung und eine geöffnete Aufnahmestellung einnehmen kann, in der das verunfallte Kraftfahrzeug in den Laderaum überführbar ist. Anstatt der Greifvorrichtung ist eine beweglich gelagerte Aufbauwand so ausgebildet, dass sie in der geöffneten Stellung durch Verfahren des Fahrzeuganhängers unter zumindest ein oder mehrere Räder des verunfallten Kraftfahrzeugs schiebbar ist. Diese beweglich gelagerte Aufbauwand weist an ihrer Wandinnenseite ein oder mehrere Greifelemente, wie insbesondere Widerhaken, Krallen oder Zinken, auf.

Bei einer beispielhaften Ausführungsform sind diese Greifelemente beweglich, so dass beim Unterfahren des verunfallten Kraftfahrzeugs diese nach unten wegklappen können, jedoch beim Einfahren der beweglich gelagerten Aufbauwand diese Krallen oder Widerhaken oder Zinken das Kraftfahrzeug mit sich reißen.

Die beweglich gelagerte Aufbauwand ist insbesondere wie ein Schub- oder Schiebeboden ausgebildet, so dass diese dann sobald sie unter das Kraftfahrzeug platziert wurde, das Kraftfahrzeug in das Laderauminnere ziehen können.

Bei einer weiteren beispielhaften Ausführungsform eines erfindungsgemäßen Fahrzeuganhängers der zuvor erläuterten Art ist zudem zu der beweglich gelagerten Aufbauwand mit innenseitigen Greifelementen eine am Fahrzeuganhänger angebrachte Greifvorrichtung vorhanden, die derart aus- und einfahrbar ist, dass bei geöffneter Aufbauwand das Kraftfahrzeug zusätzlich mittels der Greifvorrichtung ergreifbar und über die geöffnete Aufbauwand in den Laderaum überführbar ist. Bei dieser Ausführungsform ist somit das Einziehen des verunfallten Kraftfahrzeugs durch zwei Mittel möglich, nämlich durch die beweglich gelagerte Aufbauwand an sich und zudem durch die Greifvorrichtung.

Wie bereits zuvor erläutert, kann auch diese Greifvorrichtung als Ladekran mit Greifelementen ausgebildet sein, die insbesondere als ein oder mehrere Greifbacken oder Zangen oder ein oder mehrere Greifhaken oder Greifrechen ausgebildet sind. Beispielsweise ist auch dieser Ladekran ein- oder mehrgelenkig mit einem ein- oder mehrgelenkigen Greiferarm ausgebildet.

Auch kann diese Greifvorrichtung in Kombination mit der beweglichen Aufbauwand, die innenseitig beispielsweise als Schub- oder Schiebeboden ausgebildet ist, zusätzlich einen auf der Oberseite des Fahrzeugaufbaus hin- und her bewegbaren Greiferarm aufweisen.

Bei allen zuvor erläuterten Ausführungsbeispielen eines erfindungsgemäßen Fahrzeuganhängers kann zudem ein im Anhängeraufbau integrierter Flüssigkeitstank vorhanden sein. Beispielsweise ist dieser Flüssigkeitstank auf einer der Stirn- und/oder Längsseiten des Fahrzeugaufbaus ausgebildet und ermöglicht über ein oder mehrere Einfüllöffnungen mit dem Laderaum verbunden zu sein, so dass die im Tank befindliche Löschflüssigkeit, wie beispielsweise Wasser, bei geöffnetem Auslassventil allein durch die Schwerkraft in den Laderaum einbringbar ist. Somit kann zumindest bis zu einer Höhe der Akkumulatoren des verunfallten und in den Laderaum eingebrachten Kraftfahrzeugs der Laderaum mit Löschflüssigkeit gefüllt werden, so dass die Akkumulatoren zumindest in der Löschflüssigkeit eingetaucht sind und somit ein Sauerstoffabschluss gewährleistet ist. Darüber hinaus bewirkt die Löschflüssigkeit auch eine Kühlung des verunfallten Kraftfahrzeugs und eventuell brennender Teile.

Eine weitere beispielhafte Ausführungsform sieht vor, dass der Fahrzeuganhänger der zuvor erläuterten Bauarten bei integriertem Flüssigkeitstank eine Anschlussvorrichtung aufweist, um auch eine externe Zuleitung für Löschflüssigkeit in den integrierten Flüssigkeitstank zu ermöglichen. Dadurch kann zum einen der integrierte Löschflüssigkeitstank gefüllt werden, zum anderen auch sogar während des Einbringens oder bei eingebrachtem verunfallten Kraftfahrzeug in das Fahrzeuginnere des Fahrzeuganhängers dieser integrierte Flüssigkeitstank nachgefüllt werden.

Es ist hervorzuheben, dass ein erfindungsgemäßer Fahrzeuganhänger insbesondere eine Kombination von ein oder mehreren der hierin offenbarten Merkmale umfassen kann:
a) eine am Fahrzeuganhänger angebrachte Greifvorrichtung
b) einen auf der Oberseite des Fahrzeugaufbaus hin- und her bewegbaren Arm,
c) einen auf der Oberseite des Fahrzeugaufbaus hin- und her bewegbaren Schlitten,
d) einen Schubboden, der sich im Laderaum befindet und bei geöffneter Aufbauwand über diese vorstehend ausfahrbar ist,
e) einen Schubboden, der mit in der beweglichen Aufbauwand ein- und ausfahrbar ist,
f) ein Schiebeboden mit beweglich gelagertem Hebelelement und daran angebrachtem mindestens einen Greifelement wie ein Haken, Zinken, Rechen oder dergleichen,
g) ein im Laderaum befindliches Schneckenelement,
h) einen im Fahrzeuganhänger integrierten Löschflüssigkeitstank
i) einer in dem Fahrzeuganhänger befestigten Harpunenkanone mit Seilwinde
j) ein in dem Fahrzeuganhänger bodenseitig angeordnetes Scharnierförderband, das ein- und ausfahrfahrbar ist,
k) einem in dem Fahrzeuganhänger bodenseitig angeordneter Kratzboden, der ein- und ausfahrbar ist,
l) ein in dem Fahrzeuganhänger bodenseitig angeordneter Schiebeboden, der über z.B. einen Kettenantrieb mit Ritzeln oder einem Zahnstangenantrieb oder Seilantrieb ein- und ausfahrbar ist und oberseitig Zinken, Haken oder dergleichen zum Mitziehen des verunfallten Kraftfahrzeugs aufweist.

Vorzugsweise sind alle Ausführungsformen von erfindungsgemäßen Fahrzeuganhängern Anhänger im Sinne der DIN70010, also Fahrzeuge, die hinter Zugfahrzeugen wie Lastkraftwagen oder Personenkraftwagen, Traktoren etc. mitgeführt werden, aber keinen eigenen Antrieb haben. Alternativ kann der Fahrzeuganhänger insbesondere zum Manövrieren an einer Unfallstelle mit einem Antrieb wie ein Elektroantrieb ausgebildet sein. Bei einer weiteren alternativen Ausgestaltung kann der Fahrzeuganhänger zudem derart ausgebildet sein, dass er über größere Strecken wie ein Wechselbehälter auf einem Transportfahrzeug mitführbar bzw. transportierbar ist und an der Unfallstelle mittels des Zugfahrzeugs und/oder einen eigenen Antriebs in die gewünschte Position manövriert wird.

Bei einer bevorzugten Ausführungsform ist ein erfindungsgemäßer Fahrzeuganhänger als Starrdeichselanhänger ausgebildet. Selbstverständlich kann ein erfindungsgemäßer Fahrzeuganhänger aber auch als Gelenkdeichselanhänger, Sattelanhänger oder gemäß anderen bekannten Sonderformen ausgebildet sein.

Vorzugsweise weist ein Fahrzeuganhänger der hier offenbarten Art beidseitig des Fahrzeuganhängers lediglich ein oder mehrere Achs- bzw. Radstummel mit Rädern auf. Dadurch kann auf durchgehende Achsen verzichtet werden und auch die Höhe des Ladebodens des Laderaumes über dem Fahrbahnbelag ist minimiert. Dadurch ist das Überführen des verunfallten Kraftfahrzeugs in den Laderaum erleichtert.

Zusätzlich oder alternativ ist es aber auch möglich, die Radstummel oder, falls vorhanden, Radachsen, mit absenkbaren Federungsmitteln wie Luftbälgen zu versehen, so dass am Einsatzort die Höhe des Ladebodens reduziert werden kann. Zusätzlich oder alternativ können Schwenkachsen (z.B. zum Einsatz eines breiteren Löschfahrzeuges ohne Überschreitung der zulässigen Fahrzeugbreite) vorhanden sein. Zusätzlich oder alternativ können zudem steckbare Achsen (analog eines Mähdreschertiefladers) eingesetzt werden. Zusätzlich oder alternativ kann ein abnehmbarer Frontrahmenbereich (analog abnehmbarer Schwanenhals) vorhanden sein.

Abschließend ist noch anzumerken, dass vorzugsweise die größerer Hitze ausgesetzten Teile des Fahrzeuganhängers mit speziellen Materialien zum Schutz vor Feuer ummantelt sein können.

Gemäß einem weiteren Aspekt der vorliegenden Erfindung wird das eingangs genannte technische Problem durch ein Verfahren zum Aufnehmen und insbesondere Löschen eines verunfallten Kraftfahrzeug wie insbesondere ein brennendes Elektrofahrzeug gelöst. Bei dem erfindungsgemäßen Verfahren wird ein Fahrzeuganhänger an ein verunfalltes Kraftfahrzeug gefahren.

Sodann wird eine Heckklappe des Fahrzeuganhängers abgeklappt. und ein Schubboden aus dem Fahrzeuganhänger heraus unter zumindest einen Teil des verunfallten Kraftfahrzeugs gedrückt.

Darauf wird der Schubboden zusammen mit dem verunfallten Kraftfahrzeug in den Laderaum des Fahrzeuganhängers eingefahren und die Heckklappe hochgeklappt, so dass das verunfallte Kraftfahrzeug zumindest allseitig von dem Aufbau des Fahrzeuganhängers umschlossen ist.

Insbesondere ist es somit auch bei nur teilweise in den Laderaum überführtem Unfallfahrzeug möglich, die Heckklappe mit dem Unfallfahrzeug hochzuklappen und damit das Unfallfahrzeug in den Laderaum hinein zu drücken.

Abschließend wird der Laderaum des Fahrzeuganhängers mit Löschflüssigkeit derart geflutet, dass der Laderaum bis zumindest einer Mindesthöhe mit Löschflüssigkeit gefüllt ist. Die Mindesthöhe ist möglichst so zu wählen, dass ein brennender Akkumulator des verunfallten Kraftfahrzeugs in der Löschflüssigkeit untergetaucht ist.

Anzumerken ist, dass der Schubboden eventuell zusammen mit der abgeklappten Heckklappe horizontal ein- und ausgefahren wird.

Vorgenannte Aspekte der vorliegenden Erfindung lassen sich ergänzend zu den anhängigen Ansprüchen beispielsweise wie folgt definieren:
16. Fahrzeuganhänger (1) nach einem der anhängigen Ansprüche 10-15, bei dem die Greifvorrichtung einen auf der Oberseite des Fahrzeugaufbaus (2) hin- und her bewegbaren Schlitten (30) umfasst, der derart bewegbar ist, dass dieser aus dem Laderaum herauskragt, wobei insbesondere an dem herauskragenden Schlittenbereich sich nach unten erstreckende, bewegbare Greifzangen (40, 41) zum Ergreifen des verunfallten Kraftfahrzeugs (100) vorhanden sind.
17. Fahrzeuganhänger (1) nach einem der anhängigen Ansprüche 10-15 oder Aspekt 16, ferner mit:
   - einem Schubboden (20), der sich in dem Laderaum befindet und bei geöffneter Aufbauwand (4) über diesen vorstehend ausfahrbar ist.
18. Fahrzeuganhänger (1) nach Aspekt 18, bei dem der Schubboden (20) oberseitig mit ein oder mehreren Greifelementen (21) wie insbesondere Haken, beweglichen Zinken oder dergleichen ausgebildet ist.
19. Fahrzeuganhänger (1) nach einem der anhängigen Ansprüche 1-15 oder Aspekte 16-18, ferner mit:
   - einem im Laderaum befindlichen drehbaren Schneckenelement (50), das derart in Längserstreckungsrichtung teleskopierbar ist, dass es bei geöffneter Aufbauwand (4) über den Laderaum vorsteht und mit dem verunfallten Kraftfahrzeug (100) in Eingriff gelangt und durch Drehen des Schneckenelements (50) das Kraftfahrzeug (100) über die geöffnete Aufbauwand (4) in den Laderaum überführbar ist.
20. Fahrzeuganhänger (1) nach einem der anhängigen Ansprüche 1-15 oder einem der Aspekte 16-19, ferner umfassend:
   - einen im Anhängeraufbau integrierten Flüssigkeitstank (8).
21. Fahrzeuganhänger (1) nach Aspekt 21, bei dem der Flüssigkeitstank (1) über eine Auslassvorrichtung und ein- oder mehrere Einfüllöffnungen mit dem Laderaum verbunden ist und die im Tank (8) befindliche Löschflüssigkeit bei geöffnetem Auslassventil allein durch die Schwerkraft in den Laderaum einbringbar ist.
22. Fahrzeuganhänger (1) nach anhängigem Anspruch 12, bei dem der im Anhängeraufbau integrierte Flüssigkeitstank (8) eine Anschlussvorrichtung zum Zuschalten einer externen Zuleitung für Löschflüssigkeit aufweist.
23. Fahrzeuganhänger (1) nach einem der anhängigen Ansprüche 1-15 oder einem der Aspekte 16-22, bei dem der Fahrzeuganhänger (1) einen eigenen Antrieb zum Manövrieren aufweist, vorzugsweise mindestens einen Elektromotor, der auf einen oder mehrere Radstummel wirkt.
24. Fahrzeuganhänger (1) nach einem der anhängigen Ansprüche oder einem der Aspekte 16-23, bei dem die Greifvorrichtung ein horizontal aus dem Laderaum verschiebbares und um eine horizontale Drehachse bewegliches Hebelelement (201) mit Greifelement (207) umfasst, wobei Aktuatoren zum Bewegen vorhanden sind.
25. Fahrzeuganhänger (1), der zum Aufnehmen und insbesondere Löschen eines verunfallten Kraftfahrzeuges (100) wie insbesondere ein brennendes Elektrofahrzeug ausgebildet ist, mit:
   - einem Anhängeraufbau (2), der einen durch Aufbauwände (3) begrenzten Laderaum zum Aufnehmen des verunfallten Kraftfahrzeugs (100) begrenzt, wovon eine Aufbauwand (4) beweglich gelagert ist, so dass diese eine geschlossenen Stellung und eine geöffnete Aufnahmestellung, in der das verunfallte Kraftfahrzeug (100) in den Laderaum überführbar ist, einnehmen kann;
   - einer am Fahrzeuganhänger (1) angebrachten Harpunenkanone (300) und mit der Harpune (308) verbundener Einzugswinde.
26. Fahrzeuganhänger (1) nach Aspekt 26, bei dem zusätzlich ein Schiebeboden vorhanden ist.
27. Fahrzeuganhänger (1) nach einem der anhängigen Ansprüche 1-15 oder einem der Aspekte 16-26, bei dem der Schiebeboden über einen Kettenantrieb horizontal aus- und einfahrbar ist.
28. Verfahren zum Aufnehmen und insbesondere Löschen eines verunfallten Kraftfahrzeug (100) wie insbesondere ein brennendes Elektrofahrzeug, bei dem:
   - ein Fahrzeuganhänger (1) an ein verunfalltes Kraftfahrzeug (100) verfahren wird.
   - eine Heckklappe (4) abgeklappt wird und ein Schubboden (20) aus dem Fahrzeuganhänger (1) heraus unter zumindest einen Teil des verunfallten Kraftfahrzeugs (100) gedrückt wird,
   - der Schubboden (20) zusammen mit dem verunfallten Kraftfahrzeug (100) in den Laderaum des Fahrzeuganhängers (1) eingefahren wird,
   - die Heckklappe (4) geschlossen wird, so dass das verunfallte Kraftfahrzeug (100) zumindest allseitig von dem Aufbau des Fahrzeuganhängers (1) umschlossen ist, und
   - Fluten des Laderaums des Fahrzeuganhängers (1) mit Löschflüssigkeit, so dass der Laderaum bis zumindest einer Mindesthöhe mit Löschflüssigkeit gefüllt ist.
29. Verfahren nach Aspekt 28, bei dem der Schubboden zusammen mit der abgeklappten Heckklappe (4) horizontal ein- und ausgefahren wird.

### Kurze Beschreibung der Zeichnungen

Weitere beispielhafte Ausführungsformen der vorliegenden Erfindung werden unter Bezugnahme auf die nachfolgenden Fig. näher beschrieben und erläutert. Es zeigen:
Fig. 1 eine erste beispielhafte Ausführungsform eines erfindungsgemäßen Fahrzeuganhängers mit Ladekran,
Fig. 2 eine zweite beispielhafte Ausführungsform eines erfindungsgemäßen Fahrzeuganhängers mit Schubboden,
Fig. 3 eine dritte beispielhafte Ausführungsform eines erfindungsgemäßen Fahrzeuganhängers mit Ladekran in Kombination mit Schubboden,
Fig. 4a eine vierte beispielhafte Ausführungsform eines erfindungsgemäßen Fahrzeuganhängers mit oberhalb des Fahrzeuganhängeraufbaus befindlichem Schlitten mit Greifrechen,
Fig. 4b eine Detailansicht von schräg oben auf die Ausgestaltung gemäß Fig. 4a bei eingefahrenem Schlitten,
Fig. 4c eine der Fig. 4a ähnliche Ansicht bei ausgefahrenem Schlitten,
Fig. 5a eine perspektivische Ansicht von schräg oben auf eine weitere beispielhafte Ausführungsform eines erfindungsmäßen Fahrzeuganhängers mit oberseitigem Schlitten und Greifzangen,
Fig. 5b eine der Fig. 5a gleichende Ansicht mit eingefahrenem Schlitten und Zangen,
Fig. 5c eine schematische Seitenansicht der Ausführungsform gemäß den Fig. 5a und 5b, bei der der Schlitten zum Einbringen des Fahrzeugs anhebbar ist,
Fig. 6 eine weitere beispielhafte Ausführungsform eines erfindungsgemäßen Fahrzeuganhängers mit Förderschnecke,
Fig. 7 eine schematische Seitenansicht einer weiteren beispielhaften Ausführungsform eines erfindungsgemäßen Fahrzeuganhängers mit Schiebeboden,
Fig. 8 eine schematische Seitenansicht eines Details der Ausführungsform gemäß der Fig. 7, und
Fig. 9 eine weitere beispielhafte Ausführungsform eines erfindungsgemäßen Fahrzeuganhängers mit Ladekran und abgeändertem bzw. ausfahrbarem Schiebboden und Aufbauwand,
Fig. 10 eine weitere beispielhafte Ausführungsform eines erfindungsgemäßen Fahrzeuganhängers mit Harpune und Winde,

### Detaillierte Beschreibung beispielhafter Ausführungsformen der vorliegenden Erfindung

Eingangs ist anzumerken, dass gleiche Bezugszeichen in den verschiedenen Fig. gleiche technische Merkmale kennzeichnen, auch wenn die Merkmale nicht in allen Beschreibungsteilen erwähnt werden.

### 1. Ausführungsform

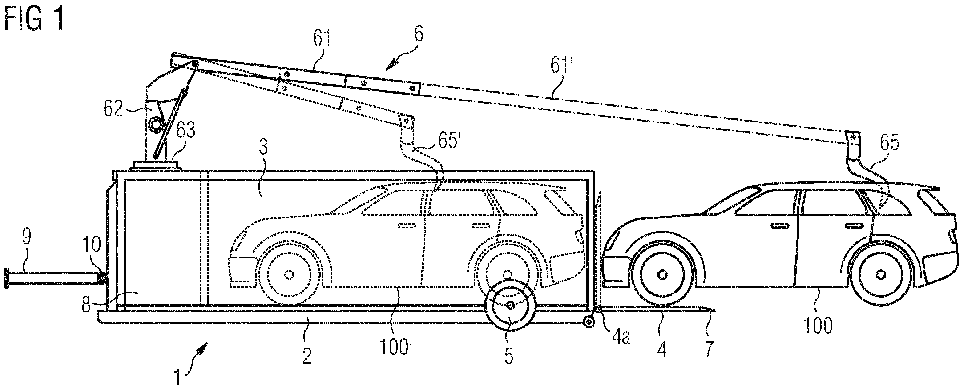

Die Fig. 1 zeigt eine schematische Seitenansicht einer ersten beispielhaften Ausführungsform eines erfindungsgemäßen Fahrzeuganhängers 1.

Der Fahrzeuganhänger 1 weist Rad- bzw. Achsstummel 5 auf, die im Gegensatz zu Radachsen nicht durchgängig sind. Im vorliegenden Beispiel ist der Fahrzeuganhänger 1 im in Fahrzeugrichtung gesehen hinteren Bereich auf jeder mit einem Radstummel 5 ausgestattet. Selbstverständlich können aber auch auf jeder Seite zwei oder mehr Radstummel vorhanden sein. Die Ausgestaltung mit Radstummel 5 hat den Vorteil, dass der Boden einer Aufnahme eines Laderaums 3 gegenüber dem Fahrbahnbelag sehr niedrig gehalten werden kann, so dass das Einbringen eines Kraftfahrzeugs 100 problemloser möglich ist. Jeder Radstummel 5 trägt ein Rad.

Der in Fig. 1 gezeigte Fahrzeuganhänger 1 umfasst einen Fahrzeugaufbau 2, der aus senkrechten Aufbauwänden 3 besteht. Eine dieser Aufbauwände 3 ist als abklappbare Heckklappe 4 ausgebildet. Die Heckklappe 4 ist über ein Gelenk 4a von einem Bediener oder alternativ durch einen Aktuator, wie beispielsweise einen Pneumatik- oder Hydraulikaktuator oder einen Elektromotor, nach unten in eine im Wesentlichen horizontale Ausrichtung abklappbar. Die Heckklappe 4 weist an ihrer oberen Stirnkante eine keilförmige Ausbildung 7 auf, um das Unterfahren eines verunfallten Kraftfahrzeugs 100 zu erleichtern.

Im vorderen Bereich ist der Fahrzeuganhänger 1 mit einer Starrdeichsel 9 ausgebildet, die über ein Gelenk 10 nach oben oder unten klappbar ist. Alternativ ist die Deichsel 9 auch abnehmbar. Bei einer anderen Alternative kann die Deichsel 9 auch einfach starr an dem Fahrzeuganhänger angebracht sein.

Im Inneren des Fahrzeugbehälters ist ein Löschtank 8 integriert, in dem beispielsweise Löschwasser oder andere Löschflüssigkeiten vorrätig gehalten werden können. Bei einer beispielhaften Ausführungsform ist eine Pumpe (hier nicht gezeigt) im Fahrzeuganhänger 1 integriert, die mit einem Ablauf im Fahrzeuganhängerboden und dem Löschfahrzeugtank 8 verbunden ist. Durch Betreiben der Löschwasserpumpe ist es dann möglich, das in das Innere, d.h. den Laderaum, eingebrachte Löschwasser wieder in den Tank 8 zurück zu pumpen.

Auf der Oberseite, vorzugsweise im vorderen Bereich des Fahrzeuganhängers 1, ist ein Ladekran 6 über eine Halterung 63 angebracht. Der Ladekran 6 entspricht dem im Nutzfahrzeugbereich üblichen Lastkranen und weist einen Aufbau 62 auf, an dem gelenkig ein Greiferarm 61 angebracht ist. Im vorliegenden Beispiel ist der Greiferarm 61 teleskopierbar ausgebildet und besitzt an seinem vorderen Ende einen oder mehrere Greifhaken 65.

Bei dem hier gezeigten Ausführungsbeispiel wird der Fahrzeuganhänger 1 in den Bereich des verunfallten Kraftfahrzeugs 100 manövriert und dann die Heckklappe 4 abgeklappt. Über den Ladekran wird dann der Haken 65 in irgendeiner Weise in das verunfallte Kraftfahrzeug 100 eingeschlagen und durch Einziehen des Greiferarms 61 das eventuell noch brennende Fahrzeug 100 in den Laderaum überführt. Sodann wird die klappbare Stirnwand 4 durch Bediener oder mittels Aktuator hochgeklappt, so dass das hier gestrichelt dargestellte Kraftfahrzeug 100' im Laderaum umschlossen ist. Der Fahrzeuganhängerboden sowie die Aufbauwände 3 mit der klappbaren Stirnwand 4 bilden einen möglichst wasserdichten Laderaum (der nach oben eventuell offen ist, d.h. kein Dach aufweisen muss).

Sodann wird durch Betätigen eines hier nicht gezeigten Ventils oder eines Schiebers das im Löschtank 8 befindliche Löschwasser in den Laderaum eingeflutet. Vorzugsweise ist eine derartige Löschflüssigkeitsmenge wie z.B. Wasser im Tank 8 vorhanden, dass der brennende Akkumulator des Kraftfahrzeugs 100' vollständig hierin eingetaucht ist. Sobald dann der Brand im Kraftfahrzeug 100', das sich im Laderaum des Fahrzeuganhängers 1 befindet, erloschen ist, kann die Löschflüssigkeit wieder in den Tank zurückgepumpt werden und das Fahrzeug wieder in umgekehrter Reihenfolge herausgeführt werden.

### 2. Ausführungsform

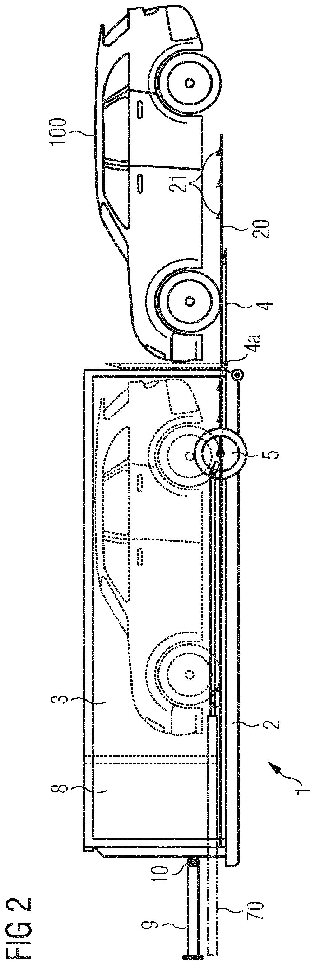

In der Fig. 2 ist weitere beispielhafte Ausführungsform eines erfindungsgemäßen Fahrzeuganhängers 1 gezeigt. Allerdings weist diese Ausgestaltung keinen Fahrzeugkran 6 auf, sondern einen ausfahrbaren Schubboden 20.

Der Schubboden 20 ist mittels eines Aktuators 70, z.B. ein Hydraulik- oder Pneumatikaktuator, oder ein elektromechanischer Stellantrieb, bei geöffneter Klappe 4 derart weit herausfahrbar, dass er unter das verunfallte Kraftfahrzeug 100 geschoben werden kann. Der Aktuator 70 besitzt vorzugsweise eine Hublänge von 2-3 m, vorzugsweise 3-4 m. Derartige Hubaktuatoren sind auf dem Markt verfügbar. Die entsprechenden Anschlüsse sind am Fahrzeuganhänger 1 vorhanden, eventuell werden die gesamten Hydraulikaggregate etc. mitgeführt.

Wie in der Fig. 2 schematisch dargestellt, weist der Schubboden 20 auf der Oberseite im in Fahrzeugrichtung gesehen hinteren Bereich feste Zacken 21 und/oder bewegliche Zacken auf. Die Zacken sind z.B. keilförmig ausgebildet, damit sie leicht unter das Fahrzeug zu drücken sind. Wenn durch den Aktuator 70 der Schubboden 20 wieder eingezogen wird, wird durch die Zacken- oder Hakenform das Kraftfahrzeug 100 zwangsweise mitgerissen. Falls notwendig, kann der Schubboden 20 auch mehrmals betätigt werden, so dass durch ein wiederholtes Ein- und Ausfahren des Schubbodens 20 das Kraftfahrzeug 100 nach und nach in das Behälterinnere gefahren wird.

### 3. Ausfuhrungsform

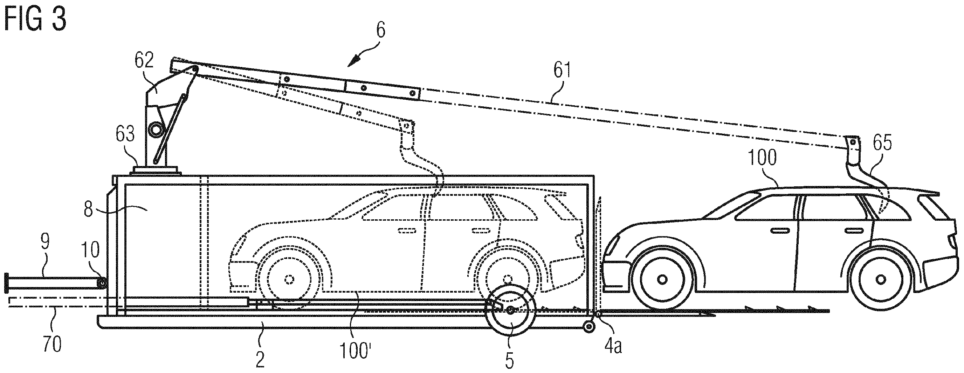

Die beispielhafte weitere Ausführungsform gemäß der Fig. 3 stellt eine Kombination der Ausführungsformen gemäß den Fig. 1 und 2 dar. Hier ist zusätzlich zu dem Schubboden 20 auch ein Ladekran 6 vorhanden, so dass das Einbringen des Kraftfahrzeugs sowohl mittels Schubboden als auch mittels Ladekran erfolgen kann oder beide zusammen das Einbringen ermöglichen.

### 4. Ausführungsform

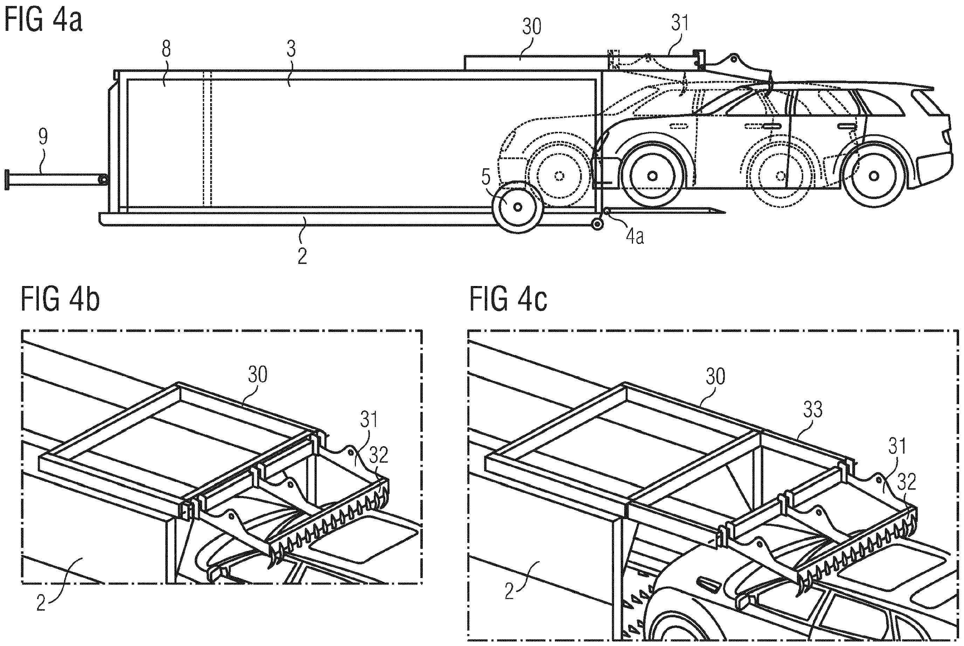

In den Fig. 4a bis 4c ist eine weitere beispielhafte Ausführungsform eines erfindungsgemäßen Fahrzeuganhängers 1 gezeigt. Hier ist anstatt eines Ladekrans 6 ein Schlitten 30 auf der Oberseite des Fahrzeugaufbaus 2 vorhanden. Dieser Schlitten 30 hat einen festen Rahmen, in dem ein Schlittenelement 31 in Fahrzeuglängsrichtung hin- und her verfahrbar ist.

An dem Schlittenelement 31 ist ein Greifrechen 32 angebracht, der mittels Aktuatoren in die Oberseite des verunfallten Kraftfahrzeugs 100 eingeschlagen werden kann. Dann erfolgt motorisch durch Aktuatoren wie Pneumatik-, Hydraulik- oder elektromechanische Akturtoren ein Einziehen des Kraftfahrzeugs, eventuell durch wiederholtes Ein- und Ausfahren des Schlittenelements 31.

### 5. Ausführungsform

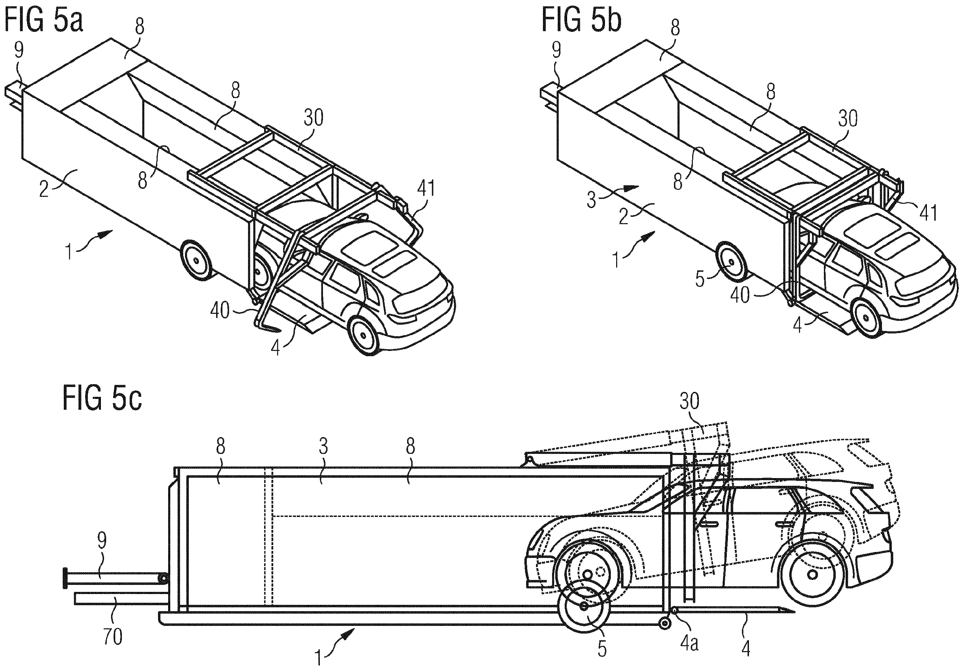

Noch eine weitere beispielhafte Ausführungsform eines erfindungsgemäßen Fahrzeuganhängers 1 ist in den Fig. 5a-5c gezeigt. Ähnlich wie in den Fig. 4a-4c ist ein Rahmen 30 vorhanden, jedoch ist hier ein Schlittenelement 31 mit Greifbacken 40, 41 versehen, die beweglich gehaltert sind und so ein beidseitiges Ergreifen des verunfallten Kraftfahrzeugs 100 ermöglichen. Bei diesen Ansichten ist zudem gut ersichtlich, dass der Löschtank 8 nicht nur am vorderen Stirnbereich des Fahranhängeraufbaus ausgebildet ist, sondern auch vorzugsweise an den oberen Bereichen auf der rechten und linken Seite des Fahrzeugaufbaus. Auf diese Weise kann ein Löschflüssigkeitsvolumen von ungefähr 5.000 1 bis 10.000 1 Löschflüssigkeit im Fahrzeuganhänger mitgeführt werden. Zudem ist es ohne weiteres möglich, die in den Laderaum des Fahrzeuganhängers 1 eingeleitete Löschflüssigkeit vollständig wieder in den Löschtank 8 zurück zu pumpen. Das hat den großen Vorteil, dass die durch brennende Akkumulatoren z.B. mit giftigen Substanzen verschmutzte Löschflüssigkeit nicht in die Umwelt gelangt, wie es aus den im Stand der Technik bekannte Lösungen der Fall sein kann. Selbstverständlich ist diese Art der Tankausgestaltung auch bei allen anderen hierin offenbarten Ausführungsbeispielen verwendbar. Zudem kann eventuell auch noch ein Löschtankteil im Boden des Fahrzeuganhängeraufbaus eingebaut sein.

Beispielsweise ist das Schlittenelement 30 zusätzlich über eine horizontale Drehachse nach oben verkippbar, wie in Fig. 5c gezeigt, um das Hereinheben eines verunfallten Kraftfahrzeugs 100 in den Laderaum zu erleichtern. Eventuell ist hier zusätzlich auch noch die Klappe 4 mittels eines Aktuators betätigbar, so dass das Überführen des verunfallten Kraftfahrzeugs 100 in den Laderaum durch Aktuator gestütztes Nachobendrücken der Klappe 4 unterstützt wird.

Es sie an dieser Stelle angemerkt, dass dieses "Nachobendrücken" in allen Ausführungsbeispielen anwendbar ist.

### 6. Ausführungsform

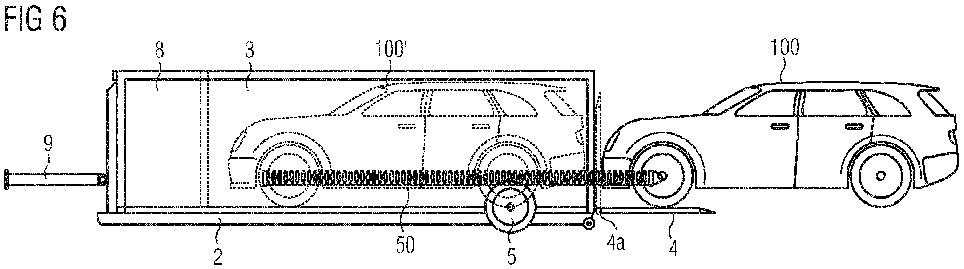

Eine alternative beispielhafte Ausführungsform eines erfindungsgemäßen Fahrzeuganhängers 1 ist zudem in der Fig. 6 gezeigt. Hier ist im Laderaum eine Förderschnecke 50 vorhanden, die Aktuator betrieben bei abgeklappter Klappe 4 aus dem Laderaum herausfahrbar ist und sich in das verunfallte Kraftfahrzeug 100 einschrauben kann. Durch Drehen der Förderschnecke 50 wird dann das verunfallte Kraftfahrzeug 100 in den Laderaum ermöglicht.

### 7. Ausführungsform

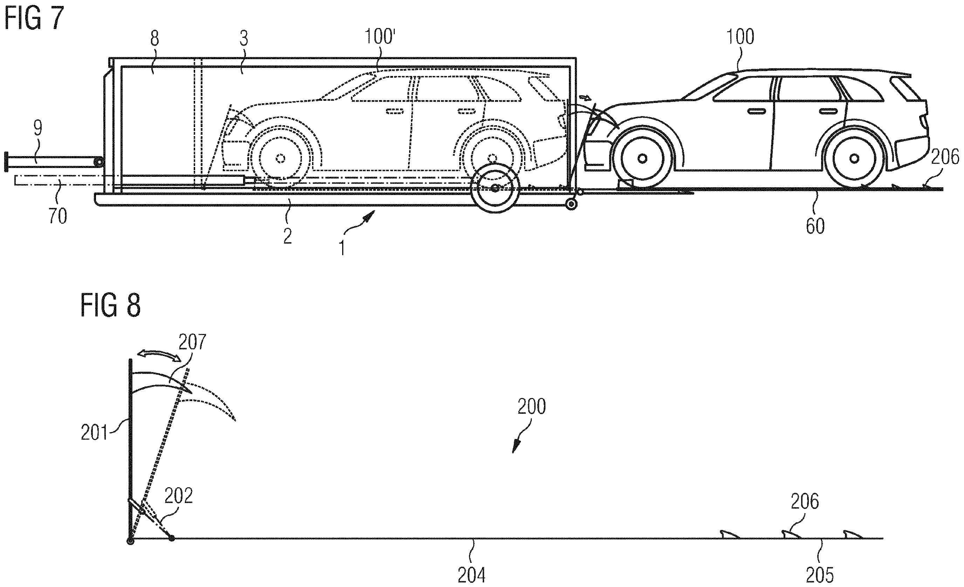

Die Fig. 7 zeigt wiederum schematisch eine weitere beispielhafte Ausführungsform eines erfindungsgemäßen Fahrzeuganhängers. Hier ist ähnlich der Ausführungsform gemäß den Fig. 2 und 3 ein Schubboden 60 vorhanden, der allerdings im vorderen Bereich mit Einhakelementen versehen ist. So wird der Schubboden 60 über einen Aktuator 70 nach außen unter das verunfallte Kraftfahrzeug 100 gebracht und dann ein oder mehrere Haken, wie er besser gezeigt ist in der Fig. 8, in den vorderen Bereich des Kraftfahrzeugs 100 eingeschlagen. Dann wird durch Einziehen des Schubbodens 60 das Kraftfahrzeug 100 in den Laderaum überführt.

In der Fig. 8 ist eine schematische Darstellung des in Fig. 7 angedeuteten Schubbodens 204 gezeigt. Hier ist der Schubboden 204 im hinteren Bereich 205 mit festen Zacken 206 ausgebildet, die alternativ oder zusätzlich auch nach unten abklappbar sind, um ein Einbringen unter das Kraftfahrzeug 100 zu ermöglichen. Ein Aktuator 200 hält ein bewegliches Hebelelement 201, an dem im vorderen Bereich Haken 207 angebracht sind. Diese Haken 207 werden dann in den geeigneten Bereich des Fahrzeugs 100 eingeschlagen und mittels des Aktuators 200 fest mit dem Kraftfahrzeug 100 verhakt. Dann wird der Boden 204 mittels des Aktuators 70 wieder in den Laderaum zurückgezogen und damit auch das Kraftfahrzeug 100'.

### 8. Ausführungsform

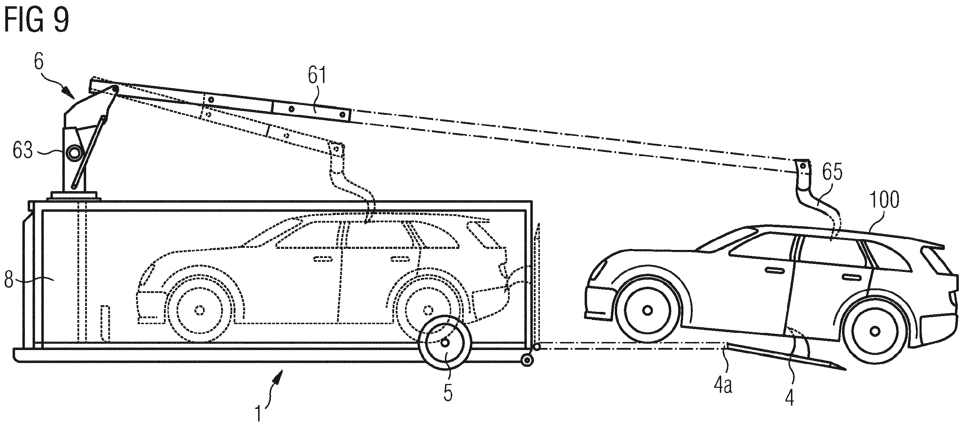

Schließlich zeigt die Fig. 9 eine weitere beispielhafte Ausführungsform eines erfindungsgemäßen Fahrzeuganhängers. Dieser ist wie in der Fig. 1 ausgebildet, weist also einen Ladekran 6 auf. Zusätzlich ist allerdings die Heckklappe 4 nicht nur abklappbar, sondern mittels Aktuator auch ausfahrbar. Und zwar in horizontaler Richtung. Dadurch ist es möglich, die Ladeklappe 4 unter das verunfallte Kraftfahrzeug 100 zu drücken und dann durch Einziehen der Ladeklappe, die hier auf der Oberseite mit festen und/oder beweglichen Zinken oder Krallen versehen ist, und Unterstützung des Ladekrans das Kraftfahrzeug 100 in den Laderaum zu überführen.

### 9. Ausführungsform

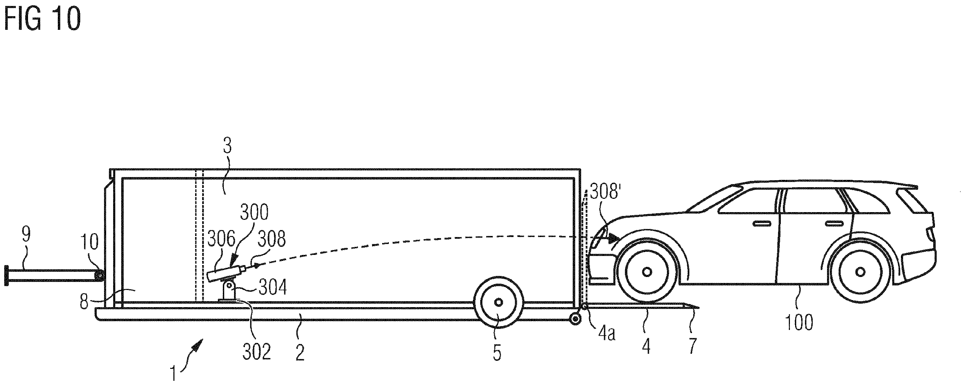

Die Fig. 10 zeigt eine weitere beispielhafte Ausführungsform eines erfindungsgemäßen Fahrzeuganhängers 1. Hier ist eine Harpunenkanone 300 im vorderen Anhängerbereich über einen Sockel 302 auf dem Boden des Anhängers 1 befestigt. Auf einem Standfuß 304 ist die Harpunenabschussvorrichtung 306 angebracht. Vorzugsweise ist die Harpunenabschussvorrichtung 306 um eine horizontale Drehachse verstellbar, um so die Abschussweite festzulegen. Beispielsweise ist zur Bewegung um die Drehachse ein Aktuator oder Elektromotor vorhanden. Mit der Abschussvorrichtung ist der Harpunenpfeil 308 in ein verunfalltes Kraftfahrzeug 100 einschießbar, siehe 308'.

Wenn der Harpunenpfeil 308' im Kraftfahrzeug fest verankert ist, wird durch Betätigen einer hier nicht gezeigten Winde das Kraftfahrzeug 100 über den mindestens einen Harpunenpfeil 308' in den Laderaum gezogen.

Es versteht sich von selbst, dass die Ausgestaltung mit Harpunenkanone 300 ohne weiteres auch mit Merkmalen der anderen Ausführungsbeispiele kombiniert werden kann. So ist z-B. Ein Schiebeboden zum unterstützen des Einbringens des Kraftfahrzeugs denkbar.

Anzumerken ist, dass bei allen offenbarten Ausführungsbeispielen von Fahrzeuganhängern anstatt des zumindest einen Aktuators zum Bewegen eines Schlittens oder eines Schiebebodens ein Ketten- oder Riemenantrieb vorgesehen werden kann. Dieser liegt dann vorzugsweises unterhalb des Schiebebodens und ist somit gut geschützt. Alternativ für irgendwelche Aktuatoren zum Bewegen eines Bauteils ist es auch möglich einen Elektromotor zu verwenden, der eventuell besser vor den auftretenden Temperaturen als ein Aktuator geschützt werden kann.

## Patentansprüche

1. Fahrzeuganhänger (1), der zum Aufnehmen und insbesondere Löschen eines verunfallten Kraftfahrzeuges (100) wie insbesondere ein brennendes Elektrofahrzeug ausgebildet ist, mit:
- einem Anhängeraufbau (2), der einen durch Aufbauwände (3) begrenzten Laderaum zum Aufnehmen des verunfallten Kraftfahrzeugs (100) begrenzt, wovon eine Aufbauwand (4) beweglich gelagert ist, so dass diese eine geschlossenen Stellung und eine geöffnete Aufnahmestellung, in der das verunfallte Kraftfahrzeug (100) in den Laderaum überführbar ist, einnehmen kann,
- einer am Fahrzeuganhänger (1) angebrachten Greifvorrichtung (6), die derart aus- und ein fahrbar ist, dass bei geöffneter Aufbauwand (4) das Kraftfahrzeug (100) mittels der Greifvorrichtung (6) ergreifbar und über die geöffnete Aufbauwand (4) in den Laderaum überführbar ist.

2. Fahrzeuganhänger (1) nach Anspruch 1, bei dem die Greifvorrichtung ein Ladekran (6) mit Greifelement (32; 40, 41; 65) ist, wobei das Greifelement insbesondere ein oder mehrere Greifbacken oder -zangen (40, 41), ein oder mehrere Greifhaken (65) oder Greifrechen (32) umfasst.

3. Fahrzeuganhänger (1) nach Anspruch 2, bei dem der Ladekran (6) einen ein- oder mehrgelenkigen Greiferarm (61) umfasst, der insbesondere teleskopierbar ist und an dessen Endbereich das Greifelement (65) angeordnet ist.

4. Fahrzeuganhänger (1) nach einem der voranstehenden Ansprüche, bei dem die Greifvorrichtung einen auf der Oberseite des Fahrzeugaufbaus (2) hin- und her bewegbaren Greifarm (61) umfasst, der derart bewegbar ist, dass dieser aus dem Laderaum herauskragt, und wobei insbesondere an dem herauskragenden Greiferarmbereich ein Greifelement wie z.B. ein oder mehrere Haken (65), Rechen (32) oder dergleichen zum Ergreifen des Kraftfahrzeugs (100) aufweist.

5. Fahrzeuganhänger (1) nach Anspruch 4, bei dem die Greifvorrichtung einen auf der Oberseite des Fahrzeugaufbaus (2) hin- und her bewegbaren Schlitten (30) umfasst, der derart bewegbar ist, dass dieser aus dem Laderaum herauskragt, wobei insbesondere an dem herauskragenden Schlittenbereich sich nach unten erstreckende, bewegbare Greifzangen (40, 41) zum Ergreifen des verunfallten Kraftfahrzeugs (100) vorhanden sind.

6. Fahrzeuganhänger (1) nach einem der voranstehenden Ansprüche, ferner mit:
- einem Schubboden (20), der sich in dem Laderaum befindet und bei geöffneter Aufbauwand (4) über diesen vorstehend ausfahrbar ist, wobei der Schubboden (20) vorzugsweise oberseitig mit ein oder mehreren Greifelementen (21) wie insbesondere Haken, beweglichen Zinken oder dergleichen ausgebildet ist.

7. Fahrzeuganhänger (1) nach Anspruch 6, bei dem der Schubboden (20) zusammen mit einer abklappbaren Heckklappe (4) horizontal verschiebbar ist und insbesondere die ein oder mehreren Greifelementen (21) wie insbesondere Haken, beweglichen Zinken oder dergleichen auf der Innen- bzw. Oberseite der Heckklappe (4) vorhanden sind.

8. Fahrzeuganhänger (1) nach einem der voranstehenden Ansprüche, ferner mit oder anstatt der Greifvorrichtung:
- einem im Laderaum befindlichen drehbaren Schneckenelement (50), das derart in Längserstreckungsrichtung teleskopierbar ist, dass es bei geöffneter Aufbauwand (4) über den Laderaum vorsteht und mit dem verunfallten Kraftfahrzeug (100) in Eingriff gelangt und durch Drehen des Schneckenelements (50) das Kraftfahrzeug (100) über die geöffnete Aufbauwand (4) in den Laderaum überführbar ist.

9. Fahrzeuganhänger (1), der zum Aufnehmen und insbesondere Löschen eines verunfallten Kraftfahrzeug (100) wie insbesondere ein brennendes Elektrofahrzeug ausgebildet ist, mit:
- einem Anhängeraufbau (2), der einen durch Aufbauwände (3, 4) begrenzten Laderaum zum Aufnehmen des verunfallten Kraftfahrzeugs (100) begrenzt, wovon eine Aufbauwand (4) beweglich gelagert ist, so dass diese eine geschlossenen Stellung und eine geöffnete Aufnahmestellung, in der das verunfallte Kraftfahrzeug (100) in den Laderaum überführbar ist, einnehmen kann,
wobei
die beweglich gelagerte Aufbauwand (4) so ausgebildet ist, dass sie in der geöffneten Stellung durch Verfahren des Fahrzeuganhängers (1) unter das verunfallte Kraftfahrzeug (100) schiebbar ist, und
die beweglich gelagerte Aufbauwand (4) an ihrer Wandinnenseite ein oder mehrere Greifelemente (21) wie insbesondere Widerhaken, Krallen oder Zinken aufweist.

10. Fahrzeuganhänger (1) nach Anspruch 9, bei dem ein Schubboden (20) zusammen mit der Aufbauwand (4) horizontal aus- und einfahrbar ist.

11. Fahrzeuganhänger (1) nach Anspruch 10, bei dem der Schubboden (20) und/oder die beweglich gelagerte Aufbauwand (4) oberseitig mit ein oder mehreren Greifelementen (21) wie insbesondere Haken, beweglichen Zinken oder dergleichen ausgebildet ist.

12. Fahrzeuganhänger (1) nach einem der Ansprüche 9-11, ferner mit:
- einer am Fahrzeuganhänger (1) angebrachten Greifvorrichtung (6), die derart aus- und ein fahrbar ist, dass bei geöffneter Aufbauwand (4) das Kraftfahrzeug (100) mittels der Greifvorrichtung (6) ergreifbar und über die geöffnete Aufbauwand (4) in den Laderaum überführbar ist.

13. Fahrzeuganhänger (1) nach Anspruch 12, bei dem die Greifvorrichtung ein Ladekran (6) mit Greifelement (32; 40, 41; 65) ist, wobei das Greifelement insbesondere ein oder mehrere Greifbacken oder -zangen (40, 41), ein oder mehrere Greifhaken (65) oder Greifrechen (32) umfasst.

14. Fahrzeuganhänger (1) nach Anspruch 13, bei dem der Ladekran (6) einen ein- oder mehrgelenkigen Greiferarm (61) umfasst, der insbesondere teleskopierbar ist und an dessen Endbereich das Greifelement (32; 40, 41; 32) angeordnet ist.

15. Fahrzeuganhänger (1) nach einem der Ansprüche 9-14, bei dem die Greifvorrichtung einen auf der Oberseite des Fahrzeugaufbaus (2) hin- und her bewegbaren Greifarm (31) umfasst, der derart bewegbar ist, dass dieser aus dem Laderaum herauskragt, und wobei insbesondere an dem herauskragenden Greiferarmbereich ein Greifelement (32) wie z.B. ein oder mehrere Haken, Rechen oder dergleichen zum Ergreifen des Kraftfahrzeugs (100) aufweist.
